# EUROPÄISCHE PATENTSCHRIFT

(11) **EP 0 830 981 B1**
(45) Veröffentlichungstag und Bekanntmachung des Hinweises auf die Patenterteilung: **02.05.2003**
(21) Anmeldenummer: 97250250.4
(22) Anmeldetag: 27.08.1997
(51) Int. Cl.: B60P 7/13

(54) **Automatische Verriegelung für Container, Wechselbehälter oder dergleichen**
Automatic load securing device for container,interchangeable container or the like
Verrouillage automatique pour conteneurs exchangeables ou similaires

(30) Priorität: 18.09.1996 DE 19639988
(43) Veröffentlichungstag der Anmeldung: 25.03.1998
(73) Patentinhaber: Gottwald Port Technology GmbH, 40597 Düsseldorf (DE)
(72) Erfinder: Kröll, Joachim, 41363 Jüchen (DE); Franzen, Hermann, Dipl.-Ing., 41238 Mönchengladbach (DE)
(74) Vertreter: Meissner, Peter E., Dipl.-Ing.

(56) Entgegenhaltungen:
- DE-A- 2 343 251
- DE-A- 19 610 374
- GB-A- 1 199 594
- GB-A- 1 306 805
- GB-A- 2 183 713

## Beschreibung

Die Erfindung betrifft eine Verriegelung für genormte Transportbehälter wie Container, Wechselbehälter oder dergl. auf Ladeflächen von Transportmitteln, mittels Spannbolzen, die aus ihren Ruhestellungen unterhalb der Ladefläche in vertikale Wirkstellungen aus der Ladefläche mindestens teilweise nach oben herausbewegbar sind und in dieser Stellung mit ihren an ihren freien Enden vorgesehenen Spannbolzenköpfen in Öffnungen in den Eckbereichen der Transportbehälter verriegelbar sind,
wobei jeder Spannbolzen Teil einer vertikal wirkenden Kolben-Zylindereinheit ist, die unterhalb der Ladefläche am Rahmen des Transportmittels befestigt ist,
der Vertikalhub jeder Kolben-Zylindereinheit dem Ausfahrweg des Spannbolzens mit dem Spannbolzenkopf nach oben aus der Ladefläche heraus entspricht,
der Spannbolzenkopf hammerkopfartig gestaltet ist und
am Umfang des Spannbolzens motorische Mittel angreifen, mit denen der Spannbolzen mit dem Spannbolzenkopf um 90° um seine Vertikalachse verschwenkbar ist,
wobei ferner jeder Spannbolzen mit dem Kolben der Kolben-Zylindereinheit konzentrisch verbunden ist und
der Spannbolzen gegen die Wirkung einer Federkraft bis in eine Endstellung ausfahrbar ist.

Eine derartige Verriegelung ist aus der GB -A- 1199594 bekannt.

Aus der DE-OS 19 06 826 ist ferner eine einklappbare Drehriegelanordnung für Container bekanntgeworden, mit der zur wirtschaftlichen Ausnutzung eines Fahrzeuges an Stelle eines Containers auch ein normaler Aufbau zusammen mit dem gleichen Rahmenträger verwendbar sein soll. Durch das horizontale Umklappen des dort beschriebenen Drehriegels mit allen Anbauteilen in das Gehäuse unterhalb der Ladefläche wird erreicht, daß die Drehriegelanordnung in diesem Zustand weder nach oben noch nach unten über das Trägerprofil des Fahrzeugrahmens vorsteht. Die Betätigung des Drehriegels erfolgt bei der bekannten Lösung durch Schwenkhebel bzw. Handgriffe manuell, wie das auch bei anders ausgebildeten Verriegelungsvorrichtungen der Fall ist.

Im modernen Gütertransportwesen kommt es zunehmend darauf an, die Be- und Entladezeiten für Containertransportfahrzeuge zu verkürzen und durch Automatisierung des Ladevorganges die manuellen Tätigkeiten weitgehend einzuschränken. Da die Ladezeiten für den Einsatz der Transportfahrzeuge Verlustzeiten sind, wird angestrebt, vollkommen auf den Einsatz von Hilfspersonal zu verzichten.
Aus der DE 23 43 251 A1 ist eine Vorrichtung zum Fixieren von Containern auf einer Ladefläche bekannt, bei der der Spannbolzen Teil einer vertikal wirkenden Kolben-Zylindereinheit ist. Durch entsprechende Führungen wird erreicht, daß der Spannbolzen eine translatorische bzw. eine translatorisch-rotierende Bewegung ausführen kann. Der Kopf des Spannbolzens wird aber nicht vollständig unter die Ladefläche abgesenkt.

Für das automatische Be- und Entladen von Containerfahrzeugen gibt es bereits hinreichende, zum Teil auch verwirklichte Vorschläge, die diesem Ziel nahekommen. Für das Verriegeln der Ladung auf der Ladefläche der Transportfahrzeuge sind bisher keine automatisch betätigten Ladungssicherungen bekannt.

Davon ausgehend ist es die Aufgabe der vorliegenden Erfindung, eine automatische Verriegelung für genormte Transportbehälter, wie Container, Wechselbehälter oder dergleichen auf Ladeflächen von Transportfahrzeugen zu schaffen, die beispielsweise ferngesteuert aktiviert und arretiert werden kann.

Zur Lösung der Aufgabe wird ausgehend von den Merkmalen des Oberbegriffs des Patentanspruchs 1 erfindungsgemäß vorgeschlagen, dass jeder Spannbolzenkopf unterhalb seines Spannbolzenkopfes koaxial von einem auf dem Spannbolzen in seiner Längsachsrichtung verschiebbaren Führungsstück umgeben ist, das gemeinsam mit dem Spannbolzen in einer der Kontur des Führungsstückes entsprechenden Bohrung in der Ladefläche des Transportmittels in eine seinen Hub begrenzende Stellung bewegbar ist, in der mindestens ein Teil des den Spannbolzenkopf stirnseitig hintergreifenden Führungsstückes aus der Ladefläche herausragt und
dass der Spannbolzenkopf in einer Endstellung nach dem Verschwenken um seine Vertikalachse und Einfahren des Kolbens der Kolben-Zylindereinheit mit dem Transportbehälter verriegelbar ist.

Mit den erfindungsgemäßen Vorschlägen ist eine automatische Verriegelung jeglicher Container und Wechselbehälter möglich, die entsprechend den Normen mit Befestigungspunkten versehen sind. Gegenüber konventionellen Gütertransporten ergeben sich wesentliche Vorteile, so kann die Erfindung beim Einsatz von fahrertosen Transportsystemen ebenso günstig angewendet werden, wie auch beim Transport der Transportbehälter auf LKW und Güterwaggons. Während bekannte Verriegelungen einzeln von transportbegleitenden Personen betätigt werden, ermöglicht eine automatische Verriegelung es dem Fahrer ohne Verlassen der Führerkabine die behälterspezifischen Verriegelungen zu aktivieren.

Es ist zwar bereits vorgeschlagen worden, am Spreader sogenannte Twist-Locks als Anschlagmittel für ISO-Container vorzusehen, bei denen jedoch die Einbaulage der Twist-Locks um 180° gedreht ist. Die Last hängt also in den Twist-Locks.

Zur günstigen Verriegelung der Transportbehälter auf der Ladefläche ist nach einem anderen Merkmal der Erfindung vorgesehen, daß die Projektionen des Spannbolzenkopfes und des Führungsstückes auf eine senkrecht zur Längsachsrichtung des Spannbolzens gesehene Projektionsebene deckungsgleich sind. Führungsstück und Spannbolzenkopf bilden beim Aufsetzen des Transportbehälters und Einführen in die Verriegelungsöffnungen eine kompakte Baueinheit, bei der der Spannbolzenkopf jeweils auf der Stirnseite des Führungsstückes aufliegt.

Damit das Führungsstück um die jeweils zur Verriegelung des Transportbehälters notwendige Höhe der Ladefläche herausragt, ist nach einem weiteren Merkmal der Erfindung vorgesehen, daß zur Hubbegrenzung des Führungsstückes in den Bohrungen der Ladefläche jeweils den Querschnitt der Bohrungen verringernde Absätze vorgesehen ist, hinter denen jeweils ein an den Führungsstücken vorgesehener Absatz zur Anlage bringbar ist, wobei die Absätze so angeordnet sind, daß die zur Verriegelung des Transportbehälters notwendige Länge des Führungsstückes aus der Ladefläche herausragen.

Um beim Ausfahren des Kolbens der Kolbenzylindereinheit mit dem Spannbolzen sicherzustellen, daß das auf dem Spannbolzen aufsitzende Führungsstück mitgenommen wird, ist vorgesehen, daß zwischen dem Führungsstück und einer am Spannbolzen vorgesehenen Bundscheibe eine Druckfeder, den Spannbolzen konzentrisch umfassend, angeordnet ist, deren Federkraft mindestens der Gewichtskraft des Führungsstückes entspricht.

Nach einem weiteren Merkmal der Erfindung ist vorgesehen, daß zum Verschwenken des Spannbolzens ein seitlich von diesem abgespreizter Hebelarm unterhalb der Ladefläche angeordnet ist, an dem ein Schwenkzylinder angreift, der mit dem Rahmen der Ladefläche verbunden ist.

Mit der Erfindung ist eine intelligente Ergänzung an der Nahtstelle zwischen Fördertechnik und Transportsystem geschaffen worden. Die Erfindung ermöglicht auch das Nachrüsten konventioneller Transportsysteme mit den günstigen Einrichtungen, so daß auch diese Transportsysteme durch Reduzierung der Nebenzeiten schneller und damit wirtschaftlicher gemacht werden können.

Ein Ausführungsbeispiel der Erfindung ist in der Zeichnung dargestellt und wird nachfolgend beschrieben. Es zeigt:
- Figur 1: die Draufsicht auf die Ladefläche eines Transportmittels,
- Figur 2: die erfindungsgemäße Verriegelung in deaktivierter Position,
- Figuren 3-7: verschiedene Verriegelungspositionen in entriegelter Stellung,
- Figur 8: die Verriegelung aktiv während des Verriegelungsvorganges,
- Figur 9: eine Draufsicht auf Figur 8,
- Figur 10: die Verriegelung in der Position nach dem Verriegelungsvorgang, und
- Figur 11: eine Draufsicht auf Figur 10.

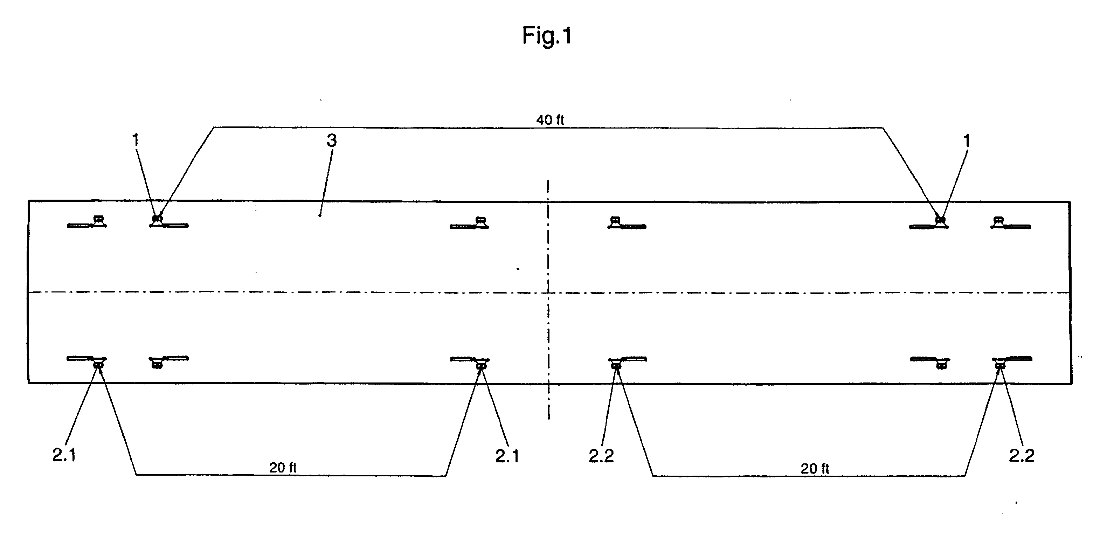

In Figur 1 wird die Ladefläche eines Transportmittels für 20 und 40 ft ISO-Container und für Wechselbehälter gezeigt. Für das Transportmittel sind 12 Punkte zur Ladungsverriegelung vorgesehen, um diese Transportbehälter auf der Ladefläche zu befestigen. Die 12 Punkte sind mit 1, 2.1 und 2.2 bezeichnet. Abhängig von der jeweiligen Ladung werden entweder die Punkte 1 oder die Punkte 2.1 sowie 2.2 benötigt. Jeder dieser Punkte zur Befestigung der Ladung enthält den erfindungsgemäßen Spannbolzen der Verriegelungsvorrichtung, die nachfolgend im einzelnen beschrieben wird.

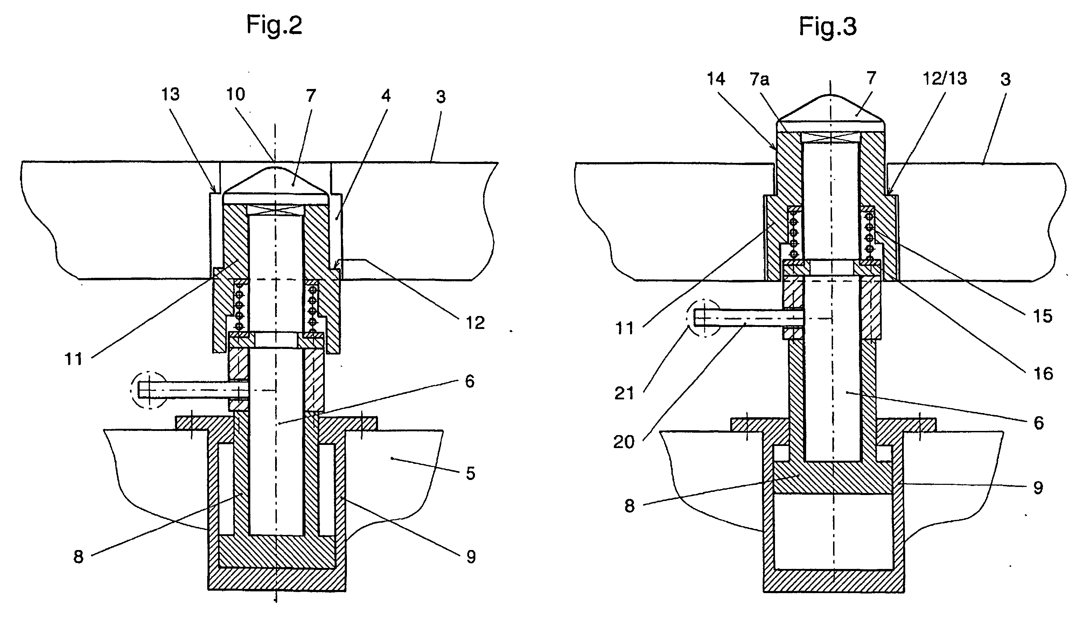

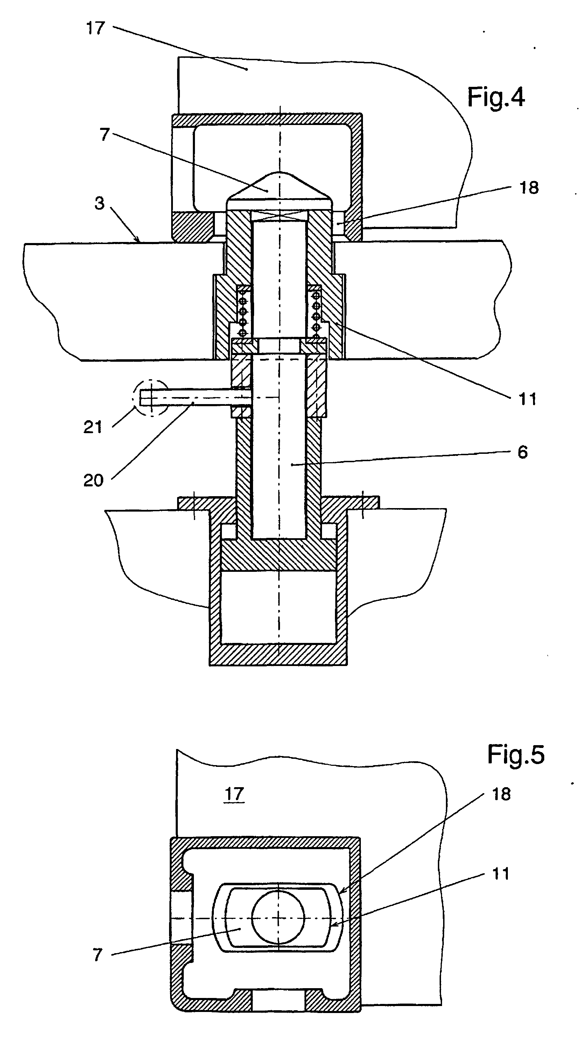

In Figur 2 ist die erfindungsgemäße Verriegelung in der deaktivierten Position schematisch dargestellt. Sie besteht aus der die Ladefläche 3 durchdringenden Bohrung 4, in der der Spannbolzen 6 geführt ist, der an seinem freien Ende den Spannbolzenkopf 7 trägt. Dieser Spannbolzenkopf 7 ist hammerkopfartig ausgebildet, d.h. in seiner Projektion ist der Spannbolzenkopf 7 im wesentlichen rechteckig. An seinem anderen Ende ist der Spannbolzen 6 im Kolben 8 einer Kolben-Zylindereinheit 9 befestigt, die doppelseitig mit Druckmittel beaufschlagbar ist. Unterhalb des Spannbolzenkopfes 7 ist konzentrisch zur Längsachse 10 des Spannbolzens 6 das Führungsstück 11 auf dem Spannbolzen 6 verschiebbar angeordnet, dessen Außenkontur der Außenkontur des Spannbolzenkopfes 7 entspricht. Das Führungsstück 11 ist bei 12 abgesetzt; ein korrespondierender Absatz 13 ist in der Bohrung 4 vorgesehen und bildet einen Anschlag für das Führungsstück 11 in der ausgefahrenen Stellung des Kolbens 8, wie sie in Figur 3 dargestellt ist. In dieser Stellung ragt ein Teil 14 des Führungsstückes 11 aus der Ladefläche 3 heraus, wobei der Spannbolzenkopf 7 stimseitig auf dem Führungsstück 11 aufliegt. Eine Druckfeder 15 zwischen dem Führungsstück 11 und einer Bundscheibe 16 am Spannbolzen 6 bewirkt, daß das Führungsstück 11 gegen den Anschlag 12 bzw. 13 an der Ladefläche 3 bzw. am Führungsstück 11 gedrückt wird. Die Bundscheibe ist zur Montage zweigeteilt ausgeführt. In Figur 3 ist ebenfalls erkennbar der Kolben 8 der Kolben-Zylindereinheit 9 nicht vollständig ausgefahren. In der Stellung nach Figur 3 wird, wie besser in Figur 4 erkennbar, die Ladung 17, beispielsweise ein ISO-Container, auf die Ladefläche 3 aufgesetzt, wobei der Spannbolzenkopf 7 in eine Bohrung 18 des Transportbehälters 17 eingreift, die in ihrer Form und Erstreckung in Figur 5 in der Draufsicht erkennbar ist. Der Transportbehälter 17 wird durch den Spannbolzenkopf 7 und dessen Form geführt, so daß der Transportbehälter 17 zentriert auf der Ladefläche 3 abgesetzt werden kann.

In Figur 5 ist auch erkennbar, daß die Kontur des Führungsstückes 11 und des Spannbolzenkopfes 7 deckungsgleich sind, so daß beide Teile mit der durch die Öffnungsgröße des Eckbeschlages des Transportbehälters 17 vorgegebenen Toleranz positioniert werden können.

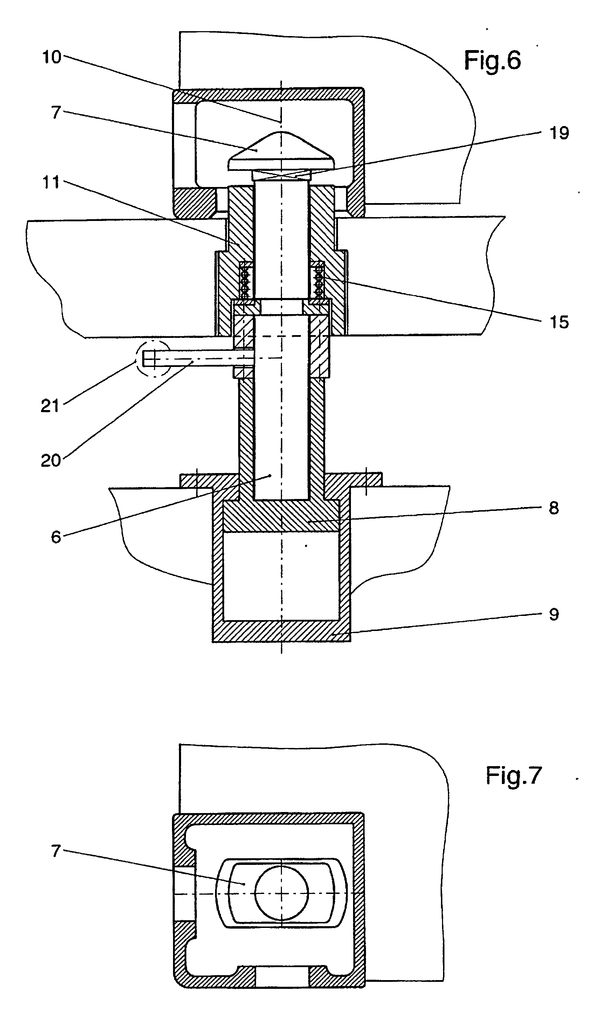

In Figur 6 wurde erkennbar der Kolben 8 der Kolben-Zylindereinheit 9 weiter mit Druckmittel beaufschlagt, so daß der Kolben in eine Endstellung gelangt, wobei er im Zylinder der Kolben-Zylindereinheit 9 zur Anlage gelangt. Dabei wurde der mit dem Kolben 8 verbundene Spannbolzen 6 weiter in Richtung seiner Längsachse 10 verschoben, und zwar durch das Führungsstück 11 hindurch, wobei sich ein an der Rückseite des Spannbolzenkopfes 7 angeformtes Vierkantstück 19 aus dem Führungsstück 11 heraushebt. Gleichzeitig wird die Druckfeder 15 zusammengepreßt und hält das Führungsstück 11 gegen die Anlagenfläche 12, 13 in der Position fest. Figur 7 zeigt die Anordnung nach Fig.6 in der Draufsicht.

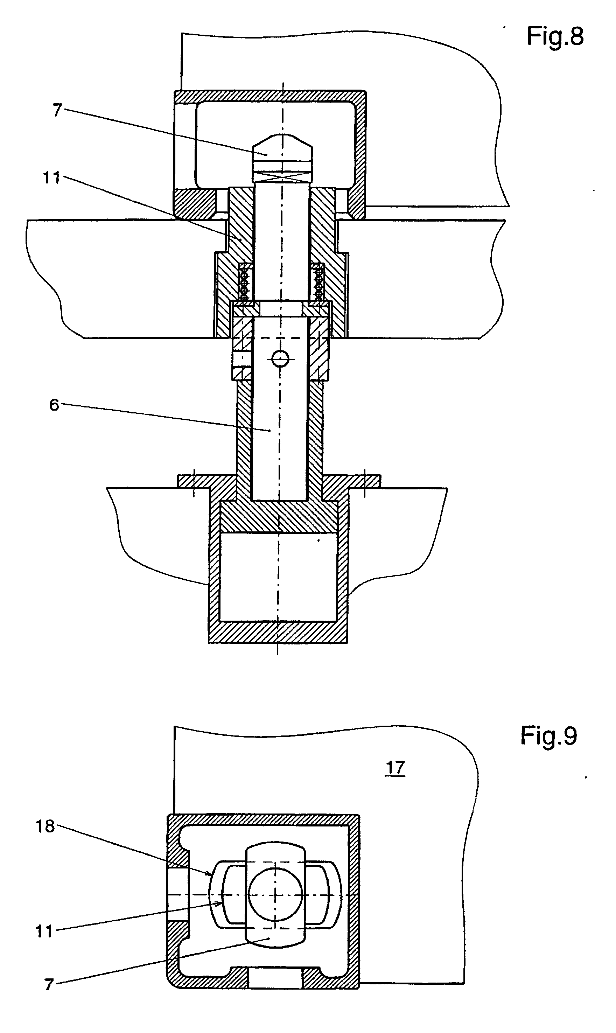

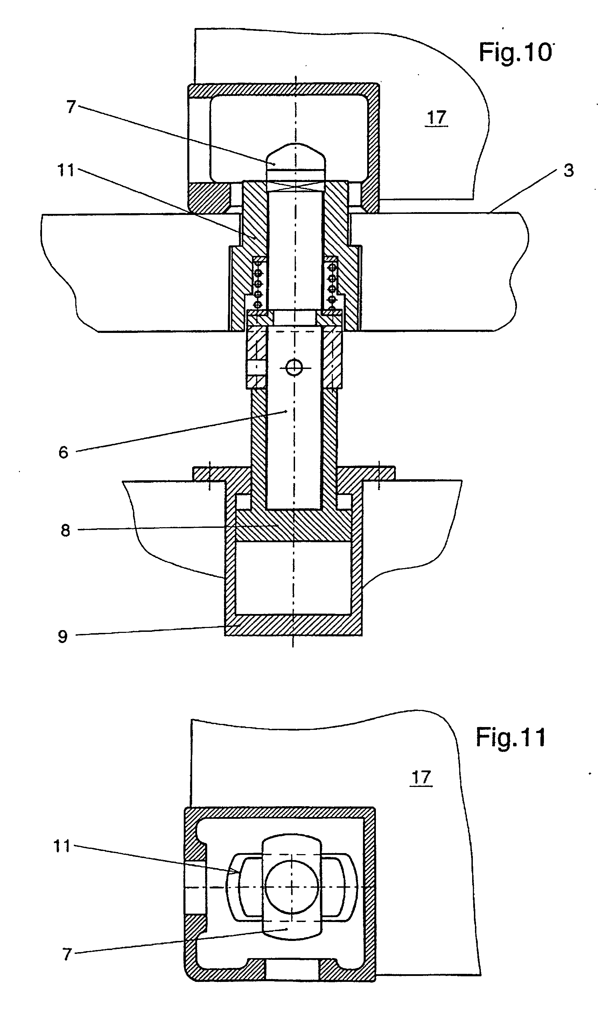

In der Figur 6 ist bei 20 auch der sich seitlich vom Spannbolzen 6 abspreizender Hebelarm erkennbar, an dem der schematisch angedeutete Schwenkzylinder 21 angreift. Durch Verschwenken dieses Hebelarms um 90° wird die in den Figur 8 dargestellte Stellung der erfindungsgemäßen Verriegelung erreicht. Erkennbar hat sich der hammerkopfartig ausgebildete Spannbolzenkopf 7 mit dem Spannbolzen 6 um 90° in dem Führungsstück 11 gedreht, so daß der Spannbolzenkopf, wie auch in Figur 9 erkennbar, nunmehr quer zu der Ausnehmung 18 im Eckbeschlag des Transportbehälters 17 steht. In dieser Stellung wird der Kolben 8 der Kolben-Zylindereinheit 9 im Einfahrsinn mit Druckmittel beaufschlagt, so daß der Spannbolzenkopf 7 gegen den Eckbeschlag des Behälters 17 gezogen wird, wodurch der Transportbehälter 17 auf der Ladefläche 3 verklemmt wird. In dieser Stellung, die in Figur 11 nochmals in der Draufsicht dargestellt ist, ist die Ladung sicher gegen Verrutschen auf der Ladefläche fixiert und kann erst durch den umgekehrten Bewegungsablauf wieder entriegelt werden.

Die vorliegende Verriegelung erlaubt durch die Möglichkeit des Absenkens des Spannbolzens ein Aufsetzen der Ladung auch über nicht benutzten Spannbolzen. Erst wenn die Spannbolzen zur Sicherung der Ladung benötigt werden, werden diese aus der versenkten Stellung durch die Ladefläche 3 hinaus nach oben bewegt, wobei sie zusammen mit dem erfindungsgemäßen Führungsstück ein sicheres Positionieren und Zentrieren der Ladung und nach Verdrehen des Spannbolzenkopfes und Spannen ein sicheres Halten der Transportbehälter auf der Ladefläche 3 ermöglichen.

## Patentansprüche

1. Verriegelung für genormte Transportbehälter wie Container, Wechselbehälter oder dergl. auf Ladeflächen von Transportmitteln, mittels Spannbolzen, die aus ihren Ruhestellungen unterhalb der Ladefläche in vertikale Wirkstellungen aus der Ladefläche mindestens teilweise nach oben herausbewegbar sind und in dieser Stellung mit ihren an ihren freien Enden vorgesehenen Spannbolzenköpfen in Öffnungen in den Eckbereichen der Transportbehälter verriegelbar sind,
wobei jeder Spannbolzen (6) Teil einer vertikal wirkenden Kolben-Zylindereinheit (9) ist, die unterhalb der Ladefläche (3) am Rahmen (5) des Transportmittels befestigt ist,
der Vertikalhub jeder Kolben-Zylindereinheit (9) dem Ausfahrweg des Spannbolzens (6) mit dem Spannbolzenkopf (7) nach oben aus der Ladefläche (3) heraus entspricht,
der Spannbolzenkopf (7) hammerkopfartig gestaltet ist und
am Umfang des Spannbolzens (6) motorische Mittel (21) angreifen, mit denen der Spannbolzen (6) mit dem Spannbolzenkopf (7) um 90° um seine Vertikalachse (10) verschwenkbar ist,
wobei femer jeder Spannbolzen (6) mit dem Kolben der Kolben-Zylindereinheit (9) konzentrisch verbunden ist und
der Spannbolzen (6) gegen die Wirkung einer Federkraft (15) bis in eine Endstellung ausfahrbar ist,
**dadurch gekennzeichnet,**
**dass** jeder Spannbolzenkopf (6) unterhalb seines Spannbolzenkopfes (7) koaxial von einem auf dem Spannbolzen (6) in seiner Längsachsrichtung (10) verschiebbaren Führungsstück (11) umgeben ist, das gemeinsam mit dem Spannbolzen (6) in einer der Kontur des Führungsstückes (11) entsprechenden Bohrung (4) in der Ladefläche (3) des Transportmittels in eine seinen Hub begrenzende Stellung bewegbar ist, in der mindestens ein Teil des den Spannbolzenkopf (7) stimseitig hintergreifenden Führungsstückes (11) aus der Ladefläche (3) herausragt und
**dass** der Spannbolzenkopf (7) in einer Endstellung nach dem Verschwenken um seine Vertikalachse (10) und Einfahren des Kolbens (8) der Kolben-Zylindereinheit (9) mit dem Transportbehälter (17) verriegelbar ist.

2. Verriegelung für genormte Transportbehälter nach Anspruch 1, **dadurch gekennzeichnet**
**dass** die Projektionen des Spannbolzenkopfes (7) und des Führungsstückes (11) auf eine senkrecht zur Längsachsrichtung (10) des Spannbolzens (6) gesehene Projektionsebene deckungsgleich sind

3. Verriegelung für genormte Transportbehälter nach Anspruch 1 bis 2 **dadurch gekennzeichnet**
**dass** zur Hubbegrenzung des Führungsstückes (11) in den Bohrungen (4) der Ladefläche (3) jeweils den Querschnitt der Bohrungen verringemde Absätze (13) vorgesehen ist, hinter denen jeweils der an den Führungsstücken (11) vorgesehene Absatz (12) zur Anlage bringbar ist, wobei die Absätze (12,13) so angeordnet sind, dass die zur Verriegelung des Transportbehälters (17) notwendige Länge des Führungsstückes (11) aus der Ladefläche (3) herausragen.

4. Verriegelung für genormte Transportbehälter nach Anspruch 1 bis 3 **dadurch gekennzeichnet**
**dass** zwischen dem Führungsstück (11) und einer am Spannbolzen (6) vorgesehenen Bundscheibe (16) eine Druckfeder (15), den Spannbolzen (6) konzentrisch umfassend, angeordnet ist, deren Federkraft mindestens der Gewichtskraft des Führungsstückes (11) entspricht.

5. Verriegelung für genormte Transportbehälter nach Anspruch 1 bis 4 **dadurch gekennzeichnet**
**dass** zum Verschwenken des Spannbolzens (6) ein seitlich von diesem abgespreizter Hebelarm (20) unterhalb der Ladefläche (3) angeordnet ist, an dem ein Schwenkzylinder (21) angreift, der mit dem Rahmen (5) der Ladefläche (3) verbunden ist.

## Claims

1. A means for locking standardised transport containers such as containers, interchangeable containers or the like on loading surfaces of means of transport, by means of clamping bolts which can be moved out of their initial positions beneath the loading surface into vertical active positions out of the loading surface at least partly upwards and can be locked in this position by their clamping bolt heads provided at their free ends into openings in the corner regions of the transport containers,
each clamping bolt (6) forming part of a vertically-acting piston-cylinder unit (9) which is fastened beneath the loading surface (3) to the frame (5) of the means of transport,
the vertical stroke of each piston-cylinder unit (9) corresponding to the path of travel of the clamping bolt (6) with the clamping bolt head (7) upwards out of the loading surface (3),
the clamping bolt head (7) being in the shape of a hammer head and motor means (21) engaging on the periphery of the clamping bolt (6), with which means the clamping bolt (6) with the clamping bolt head (7) can be pivoted by 90° about its vertical axis (10),
each clamping bolt (6) furthermore being concentrically connected to the piston of the piston-cylinder unit (9) and
the clamping bolt (6) being able to be moved out counter to the action of a spring force (15) into an end position,
**characterised in that**
each clamping bolt (6) beneath its clamping bolt head (7) is coaxially surrounded by a guide part (11) which is displaceable on the clamping bolt (6) in the direction of its longitudinal axis (10), which part together with the clamping bolt (6) can be moved in a bore (4) in the loading surface (3) of the means of transport which corresponds to the contour of the guide part (11) into a position which limits its stroke, in which at least part of the guide part (11) which engages behind the end face of the clamping bolt head (7) projects out of the loading surface (3) and that the clamping bolt head (7) can be locked with the transport container (17) in an end position after pivoting about its vertical axis (10) and retraction of the piston (8) of the piston-cylinder unit (9).

2. A locking means for standardised transport containers according to Claim 1, **characterised in that** the projections of the clamping bolt head (7) and of the guide part (11) on a plane of projection viewed at right-angles to the direction of the longitudinal axis (10) of the clamping bolt (6) are identical.

3. A locking means for standardised transport containers according to Claims 1 to 2, **characterised in that** in each case shoulders (13) which reduce the cross-section of the bores are provided for limiting the stroke of the guide part (11) in the bores (4) of the loading surface (3), behind each of which shoulders the shoulder (12) provided on the guide parts (11) can be brought to lie, the shoulders (12, 13) being arranged such that the length of the guide part (11) which is necessary for bolting the transport container (17) projects from the loading surface (3).

4. A locking means for standardised transport containers according to Claims 1 to 3, **characterised in that** a pressure spring (15), concentrically surrounding the clamping bolt (6), is arranged between the guide part (11) and a collar plate (16) provided on the damping bolt (6), the spring force of which spring corresponds at least to the weight of the guide part (11).

5. A locking means for standardised transport containers according to Claims 1 to 4, **characterised in that** for pivoting the clamping bolt (6) a lever arm (20) spread out laterally therefrom is arranged beneath the loading surface (3), on which arm engages a pivoting cylinder (21) which is connected to the frame (5) of the loading surface (3).

## Revendications

1. Verrouillage pour des récipients de transport normés, comme des conteneurs, des récipients interchangeables ou analogues, sur des surfaces de charge de moyens de transport, au moyen de boulons de tension, qui peuvent être retirés au moins partiellement vers le haut de leurs positions de repos au-dessous de la surface de charge dans des positions actives verticales hors de la surface de charge et, dans cette position, peuvent être verrouillés par leurs têtes prévues à leurs extrémités libres dans des ouvertures dans les zones de coin des récipients de transport, chaque boulon de tension (6) faisant partie d'un vérin (9) agissant verticalement qui est fixé au-dessous de la surface de charge (3) sur le châssis (5) du moyen de transport, la course verticale de chaque vérin (9) correspondant à la course de déplacement du boulon de tension (6) avec la tête du boulon de tension (7) vers le haut hors de la surface de charge (3), la tête du boulon de tension (7) étant réalisée à la manière d'une tête de marteau et des moyens motorisés (21) s'engageant à la périphérie du boulon de tension (6), grâce auxquels le boulon de tension (6) avec la tête (7) peut être pivoté de 90° autour de son axe vertical (10), chaque boulon de tension (6) étant par ailleurs relié de façon concentrique au piston du vérin (9) et le boulon de tension (6) pouvant être sorti contre l'action d'une force élastique (15) jusque dans une position d'extrémité,
**caractérisé en ce que** chaque boulon de tension (6), au-dessous de sa tête (7), est entouré coaxialement par une pièce de guidage (11) déplaçable sur le boulon de tension (6) dans sa direction axiale longitudinale (10), qui en même temps que le boulon de tension (6) est déplaçable dans un perçage (4) correspondant au contour de la pièce de guidage (11) dans la surface de charge (3) du moyen de transport dans une position limitant sa course, dans laquelle au moins une partie de la pièce de guidage (11) engageant par l'arrière de façon frontale la tête (7) du boulon de tension fait saillie de la surface de charge (3), et **en ce que** la tête (7) du boulon de tension peut être verrouillée dans une position d'extrémité après le pivotement autour de son axe vertical (10) et la rentrée du piston (8) du vérin (9) au récipient de transport (17).

2. Verrouillage pour des récipients de transport normés selon la revendication 1,
**caractérisé en ce que** les projections de la tête (7) du boulon de tension et de la pièce de guidage (11) sur un plan de projection orthogonal à la direction de l'axe longitudinal (10) du boulon de tension (6) coïncident.

3. Verrouillage pour des récipients de transport normés selon les revendications 1 à 2,
**caractérisé en ce que**, pour limiter la course de la pièce de guidage (11) dans les perçages (4) de la surface de charge (3), il est prévu, à chaque fois, des décrochements (13) diminuant la section transversale des perçages, derrière lesquels, à chaque fois, le décrochement (12) prévu sur les pièces de guidage (11) peut être amené en appui, les décrochements (12, 13) étant agencés de sorte que la longueur, nécessaire pour le verrouillage du récipient de transport (17), de la pièce de guidage (11) fait saillie de la surface de charge (3).

4. Verrouillage pour des récipients de transport normés selon les revendications 1 à 3,
**caractérisé en ce que**, entre la pièce de guidage (11) et un collet (16) prévu sur le boulon de tension (6), il est agencé un ressort de pression (15), entourant de façon concentrique le boulon de tension (6), dont la force élastique correspond au moins au poids de la pièce de guidage (11).

5. Verrouillage pour des récipients de transport normés selon les revendications 1 à 4,
**caractérisé en ce que**, pour pivoter le boulon de tension (6), un bras de levier (20) écarté latéralement de celui-ci est agencé au-dessous de la surface de charge (3), sur lequel s'engage un cylindre de pivotement (21) qui est relié au châssis (5) de la surface de charge (3).
